# EUROPEAN PATENT SPECIFICATION

(11) **EP 4 201 594 B1**
(45) Date of publication and mention of the grant of the patent: **20.11.2024**
(21) Application number: 22213646.7
(22) Date of filing: 14.12.2022
(51) Int. Cl.: B25B 15/00, B25B 23/14, F24D 19/10, F16K 1/52, F16K 31/60, B25B 23/142

(54) **HEAT REGULATION CONTROL VALVE ADJUSTMENT TOOL**
WERKZEUG ZUR EINSTELLUNG EINES WÄRMEREGELUNGSREGELVENTILS
OUTIL DE RÉGLAGE DE SOUPAPE DE COMMANDE DE RÉGULATION DE CHALEUR

(30) Priority: 22.12.2021 SE 2151602
(43) Date of publication of application: 28.06.2023
(73) Proprietor: Purmo Group Sweden AB, 285 21 Markaryd (SE)
(72) Inventor: Arvidsson, Thomas, 34135 Ljungby (SE); Bernhardsson, Anders, 285 40 Markaryd (SE)
(74) Representative: Bergenstråhle & Partners AB

(56) References cited:
- EP-A1- 2 746 889
- EP-A1- 3 054 365
- EP-A1- 3 627 021
- DE-A1- 4 107 969

## Description

### Field of the invention

The present invention relates to a heat regulation control valve adjustment tool, comprising a handle and a screw-drive interface for cooperating with a mating pre-setting screw in a control valve for turning the pre-setting screw by turning the handle about a main axis.

### Technical background

Such tools are mainly used when installing a heating system including a large number of radiators in a building, but also for subsequent adjustment of a heating system. Each radiator may comprise a control valve that controls the amount of hot water that passes through the radiator based on a control input from a thermostat sensing the temperature in the room.

Before attaching a thermostat to a valve, the valve is set to a specific initial setting in order to optimize the system and reduce energy usage. The initial setting is based on the radiator type, and the room's size and location in the building, for instance. Often this adjustment is made by turning a knob or similar to different positions, but in order to achieve better precision and offering more setting alternatives which will permit more reduction of energy usage, this is done with a tool of the initially mentioned type. One problem associated with this process is to provide a tool that allows for a precise initial setting of the thermostat in an efficient manner.

EP-2746889-A1 describes an adjusting tool for adjusting a presetting a heat exchanger valve. The adjusting tool comprises a first and a second part, being moveable relative to each other in a preadjustment condition. In an adjustment condition said first and second parts are fixed relative to each other. The first part has a valve geometry adapted to engage a stationary part of the valve and the second part has an engaging geometry adapted to engage a presetting element of the heat exchanger valve.

### Summary of the invention

One object of the present invention is to provide a heat regulation control valve adjustment tool that allows for precise initial setting of a valve in a quick and efficient manner.

This object is achieved by means of a heat regulation control valve adjustment tool as defined as in claim 1. More specifically, in a tool of the initially mentioned kind, there is provided a first ring arranged coaxially with the main axis, for rotating with the handle, wherein this ring is releasable with regard to the handle for rotating about the main axis in relation to the handle. The tool further comprises a second ring arranged coaxially with the main axis and rotatably in relation to the first ring about the main axis, wherein the second ring comprises a rotation locking interface for connecting to a valve portion other than the pre-setting screw. One of the first and second rings comprises an angular position setting indication, such as a scale or the like, and the other comprises an index relating to the setting indication.

This allows a user to connect the tool to the pre-setting screw which may be rotated to an initial position, typically where it is screwed to an innermost position. Then, the first ring may be adjusted, for instance with regard to a reference position associated with the valve and acting as an index, to a starting position. Subsequently the tool is rotated, the pre-setting screw typically moving outwards until the index of the valve or the like points to a desired setting on a scale or the like on the first ring. This allows for a very precise and reproducible setting of the pre-setting screw in an efficient manner. This further allows for a simple and intuitive presetting of the valve.

The screw-drive interface may comprise outer splines for connecting with inner splines of a pre-setting screw.

The first ring may be arranged on the handle, the second ring being arranged to rotate in relation to the first ring, and the torque needed for turning first ring in relation to the handle is greater than the torque needed for turning the second ring in relation to the first ring. This allows the rings to be set correctly in an efficient manner.

The locking interface of the second ring may for instance comprise inner ribs for connecting with outer knurls of a valve.

The handle may be connected to the screw-drive interface via a torque limiter defining a maximum torque that can be applied to the screw-drive interface in one direction. This may eliminate or at least reduce the risk that the pre-setting screw of the valve is driven too hard into its reference or zero position, thereby damaging the valve. The maximum torque may be set by a torque setting nut acting on a spring, typically in a range between 6-50 Ncm.

The handle may comprise a visual guide pointing in a direction parallel with the main axis. This allows the tool to be used to determine an already set pre-setting value.

The present invention also considers a combination of a tool according to any of the preceding claims and a heat regulation control valve.

### Brief description of the drawings

Fig 1 illustrates an example of the tool of the present invention.
Fig 2 shows an exploded view of the tool in fig 1.
Fig 3 shows a cross section through the tool of fig 1 when connected to a valve.
Fig 4 shows the second ring of the tool, a portion thereof broken away to reveal the interior a rotation locking interface.

### Detailed description

The present invention relates to a tool for a control valve typically for a heating system. When used in a heating system, the control valve controls the flow of a fluid, such as hot water, to a radiator in order to control the amount of heat the radiator emits to the room where it is located. Typically, a thermostat may be connected to the control valve to sense the room temperature and change the flow through the control valve accordingly by changing a flow area therein. The tool to be described herein is used to carry out an initial setting of the valve by adjusting a pre-setting screw inside the valve. This is done to ensure that a certain input from a thermostat, corresponding to a detected deviation from a desired room temperature, results in an adequate response from the valve. The adjustment is typically done depending on the radiator and the room sizes and the room's location in a building (e.g. reflecting the distance from a circulation pump and the need for balancing flows in the overall heating system of the building). The desired setting can be found by the installation personnel for instance using a lookup table or control valve type adjusted pre-determined values.

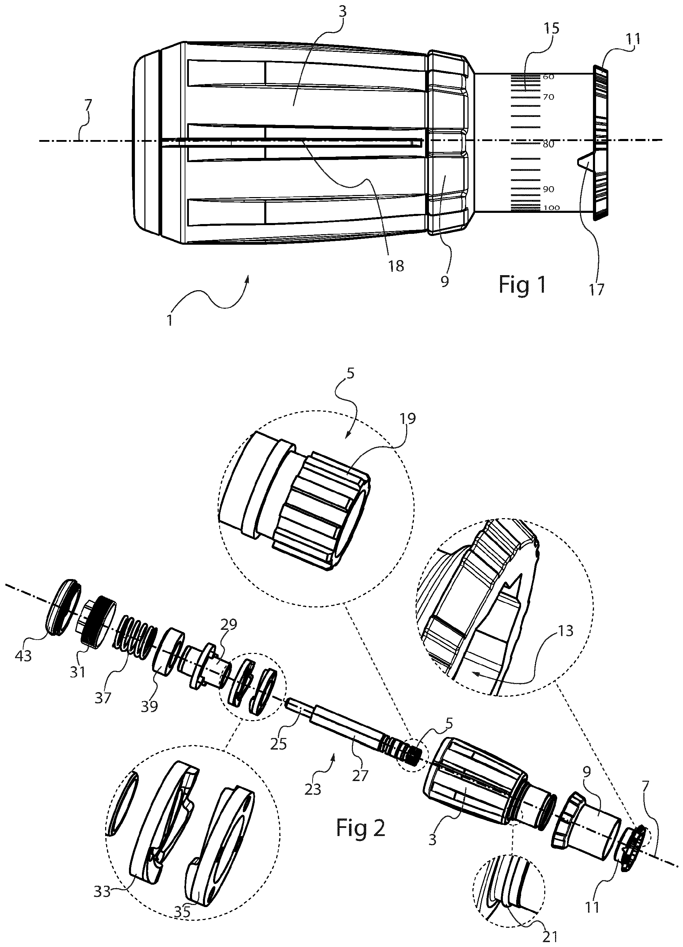

Fig 1 illustrates the tool 1 of the present invention. The tool 1 comprises a handle 3 and a screw-drive interface 5 (hidden in fig 1, cf. fig 2) for cooperating with a mating pre-setting screw in the valve. The screw-drive interface 5 turns with the handle 3 about a main axis 7 of the tool 1. A first ring 9 is arranged coaxially with the main axis 7, and normally rotates with the handle 3. The first ring 9 is however releasable with regard to the handle 3 such that it can rotate about the main axis 7 also in relation to the handle 3. The first ring 9 may comprise a scale 15 converting a turning of the handle to one or more valve parameters.

The tool further comprises a second ring 11 arranged coaxially with the main axis 7 and rotatably in relation to the first ring 9 and the handle 3 about the main axis 7. Thus, the user need not rely on an index on the valve when adjusting the pre-setting screw of the valve as will be shown. Further, as will be described, the second ring 11 comprises a rotation locking interface for connecting to a valve portion other than the pre-setting screw such that it is kept still when the handle is turned to adjust the pre-setting screw. The second ring further comprises an index 17 which points at different locations on the scale 15 of the first ring 9.

Generally, the scale 15 may be referred to as an angular position setting indication. It is noted that the scale 15 and the index 17 in principle may switch places such that the former is associated with the second ring 11 and the latter with the first 9.

Fig 2 shows an exploded view of the tool in fig 1. The first ring 9 may be attached to the handle 3 by being snapped onto a circumferential ridge 21 at the front thereof, allowing the first ring 9 to be turned with respect to the handle 3 about the main axis 7 but against a certain amount of friction, such that the first ring 9 is not accidently rotated but only by deliberately applying a sufficient torque thereto.

A tool piece 23 having the screw-drive interface 5 at the front thereof projects through the handle portion 3 which is hollow, and the second ring 11 may be attached to the tool piece 23 rotatably about the main axis 7 such that it can be rotated against a low friction. As an alternative, could instead be rotatably attached to the first ring 9.

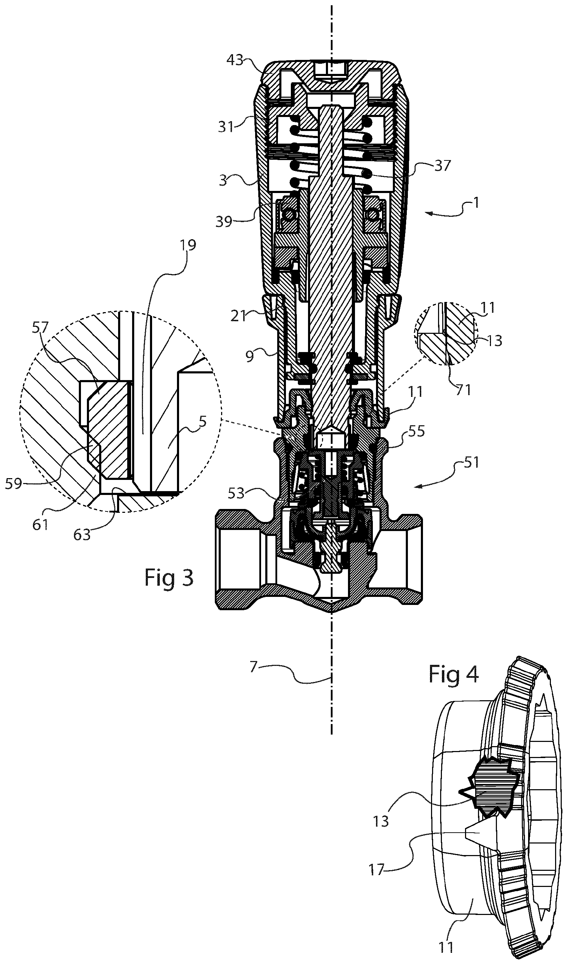

The second ring 11 may comprise a rotation locking interface 13 at the interior thereof, which is more clearly visible in fig 4, where a portion is broken off to reveal the rotation locking interface 13, which in the illustrated case is a ribbed pattern devised to lock with an outer knurled surface of the valve as will be shown. Needless to say, other types of locking interfaces are conceivable.

Returning to fig 2, a torque limiting function between the handle 3 and the tool piece 23 can be provided as will be described. This function limits the torque that can be applied to the pre-setting screw of a valve, such that the valve member or valve seat of the valve are not deformed in any way and still are safely driven to a reference position.

The rear portion 25 of the tool piece 23 may be cylindrical and fit rotatably inside a corresponding opening in a torque setting nut 31. The mid portion 27 of the tool piece 23 may have a hexagonal cross section (as one example, a square cross section being another option, for instance) such that it rotates with an axial bias element 29 having an opening with a matching cross section. A first detent plate 33 is connected to the axial bias element 29 such that it rotates therewith, and a second detent plate 35 is connected to the interior of the handle 3 thereby following the handle 3 when it rotates. The first and second detent plates 33, 35 comprise mutually facing ramp-shaped surfaces.

The torque setting nut 31 comprises outer threads that engage with inner threads (not shown) of the hollow handle 3 and screwing the torque setting nut 31 into the handle compresses a spring 37 that acts upon the axial bias element 29 via an axial bearing 39.

When the handle 3 is rotated, the second detent plate 35 moves therewith, as does the first detent plate 33 thereby rotating the biasing element 29 and the tool piece 23. However, when the applied torque comes near a maximum threshold, the ramp surfaces of the first detent plate 33 begins to climb on the ramp surfaces of the second detent plate 35 against the force of the spring 37 until the ramp surfaces begin snapping past each other when the maximum torque threshold is exceeded. Then, the tool piece 23 no longer rotates with the handle 3, thus limiting the torque applied by the screw-drive interface 5. The torque limit can be set by screwing the torque setting nut 31 further into or out of the handle 3, thereby biasing the spring 37 to a greater or lesser extent. This is normally only done at manufacturing of the tool 1, and the end of the handle can be sealed with a cap 43.

Fig 3 shows a cross section through the tool of fig 1 when connected to a valve. When performing an adjustment procedure with the tool 1, the user may proceed as follows. A stuffing box (not shown) of the valve 51 to be adjusted may be removed. That item is otherwise fastened to the end of the valve along the main axis 7 to connect a thermostat to be fastened thereto to the valve member 53 inside the housing 55 of the valve.

The tool 1 is then inserted into the valve 51 where its screw-drive interface 5 is connected to a setting screw 57, best seen in the enlarged portion of fig 3. The screw drive interface may be devised in different ways as long as it is able to connect with the setting screw 57.

At this time, the second ring 11 may be brought into a rotation locking engagement with a part of the valve that does not rotate with the pre-setting screw 57. Typically, an outer knurled surface 71 of the valve normally used to keep a thermostat in place may be used to this end, engaging with a locking interface 13 on the inner surface of the second ring 11. The user may then make sure that an index 17 of the second ring is located at a convenient orientation that can be easily seen by the user.

The pre-setting screw 57 may be hollow and provided with inner splines that engage with the outer splines 19 of the tool screw-drive interface 5 (cf. e.g. the enlarged portion of fig 2). The outer face of the setting screw 57 may be provided with external threads 59 that engage with internal threads 61 in the part of the valve housing 51 where the setting screw is mounted. Therefore, by turning the handle 3 of the adjustment tool 1, the user can move the setting screw 57 up and down in relation to the housing 51. When having been screwed in a first direction far enough into the valve, the pre-setting screw 57 begins to act on a valve member surface 63 forcing the valve member downwards with reference to the orientation in fig 3. When the valve member touches its seat, the reference position is reached. If a torque limiting function is provided, this is where the handle 3 begins to slip upon further turning with a clicking sound letting the user know that the pre-setting screw 57 has bottomed. If no torque limiting function is provided, the user should instead be careful not to apply too much torque to the handle.

In this state, the first ring 9 may be rotated in relation to the handle 3, into a suitable starting position. Since the second ring 11 with an index 17 is provided, this could mean moving the first ring 9 until the index 17 points to a zero position on the scale 15 of the first ring 9. According to an embodiment which does not form part of the invention, a reference mark on the valve itself could be used in a similar manner.

In a subsequent step, the handle 3 is turned in the direction opposite to the first direction, thereby moving the pre-setting screw from its bottom position. This is done until the index 17 of the second ring 11 (or alternatively a reference mark on the valve itself) points to a predetermined point at the scale of the first ring 9 as determined by a pre-setting value obtained for instance from a lookup table as mentioned earlier. Then the presetting is completed. The tool 1 may be removed from the valve, simply by being pulled out, the stuffing box may be re-fitted, and a thermostat may be attached to the valve, which is then ready for operation.

As illustrated in fig 1, the handle may comprise a visual guide 18 pointing in a direction parallel with the main axis 7. This allows the tool to be used to determine an already set pre-setting value. Then, the tool is connected to the valve with the index 17 of the second ring 11 pointing towards the visual guide 18. The tool is turned until the pre-setting screw of the valve reached its bottom position, activating the torque limiting function, Then, the scale 15 of the first ring 9 is set to a zero position with regard to the index 17. The tool is then turned back to the initial position as indicated by the visual guide 18 and the index 17, and the already set value can be read from the scale 15.

The present invention is not restricted to the above-described examples and may be varied and altered in different ways within the scope of the appended claims.

## Claims

1. A heat regulation control valve adjustment tool (1), comprising a handle (3) and a screw-drive interface (5) for cooperating with a mating pre-setting screw in a control valve for turning the pre-setting screw by turning the handle (3) about a main axis (7), the tool (1) comprising a first ring (9) arranged coaxially with the main axis (7), for rotating with the handle (3), wherein the first ring (9) is releasable with regard to the handle for rotating about the main axis (7) in relation to the handle, the tool (1) **characterized by** a second ring (11) arranged coaxially with the main axis (7) and rotatably in relation to the first ring (9) about the main axis, wherein the second ring comprises a rotation locking interface (13) for connecting to a valve portion other than the pre-setting screw, wherein one of the first (9) and second ring (11) comprises an angular position setting indication (15), such as a scale or the like, and the other comprises an index (17) relating to the setting indication.

2. Tool according to claim 1, wherein the screw-drive interface (5) comprises outer splines (19) for connecting with inner splines of a pre-setting screw.

3. Tool according to claim 1 or 2, wherein the first ring (9) is arranged on the handle (3), the second ring (11) is arranged rotatably in relation to the first ring (9), and the torque needed for turning first ring (9) in relation to the handle (3) is greater than the torque needed for turning the second ring (11) in relation to the first ring (9).

4. Tool according to claim 1-3, wherein the locking interface (13) of the second ring (11) comprise inner ribs for connecting with outer knurls of a valve.

5. Tool according to any of the preceding claims, wherein the handle (3) is connected to the screw-drive interface (5) via a torque limiter (33, 35, 37) defining a maximum torque that can be applied to the screw-drive interface (5) in one direction.

6. Tool according to claim 5, wherein the maximum torque is set by a torque setting nut (31) acting on a spring (37).

7. Tool according to claim 6, wherein the torque limiter is adjustable in a range between 6-50 Ncm.

8. Tool according to any of the preceding claims, wherein the handle (3) comprises a visual guide (18) pointing in a direction parallel with the main axis (7).

9. A combination of a tool according to any of the preceding claims and a heat regulation control valve.

## Patentansprüche

1. Werkzeug zur Einstellung eines Wärmeregelungsregelventils (1), umfassend einen Griff (3) und eine Schraubantriebsschnittstelle (5) zum Zusammenwirken mit einer passenden Einstellschraube in einem Regelventil zum Drehen der Einstellschraube durch Drehen des Griffs (3) um eine Hauptachse (7), wobei das Werkzeug (1) einen ersten Ring (9) umfasst, der koaxial mit der Hauptachse (7) angeordnet ist, zum Drehen mit dem Griff (3), wobei der erste Ring (9) in Bezug auf den Griff zum Drehen um die Hauptachse (7) bezüglich des Griffs lösbar ist, wobei das Werkzeug (1) durch einen zweiten Ring (11) gekennzeichnet ist, der koaxial mit der Hauptachse (7) angeordnet und in Bezug auf den ersten Ring (9) um die Hauptachse drehbar ist, wobei der zweite Ring eine Drehverriegelungsschnittstelle (13) zum Verbinden mit einem anderen Ventilabschnitt als der Einstellschraube aufweist, wobei einer aus dem ersten (9) und dem zweiten Ring (11) eine Winkelpositionseinstellungsanzeige (15) umfasst, wie eine Skala oder ähnliches, und der andere einen Index (17) bezüglich der Einstellungsanzeige umfasst.

2. Werkzeug nach Anspruch 1, wobei die Schraubantriebsschnittstelle (5) äußere Keilnuten (19) zum Verbinden mit inneren Keilnuten einer Einstellschraube umfasst.

3. Werkzeug nach Anspruch 1 oder 2, wobei der erste Ring (9) am Griff (3) angeordnet ist, der zweite Ring (11) drehbar in Bezug auf den ersten Ring (9) angeordnet ist und das zum Drehen des ersten Rings (9) in Bezug auf den Griff (3) benötigte Drehmoment größer ist als das zum Drehen des zweiten Rings (11) in Bezug auf den ersten Ring (9) benötigte Drehmoment.

4. Werkzeug nach Anspruch 1-3, wobei die Verriegelungsschnittstelle (13) des zweiten Rings (11) Innenrippen zum Verbinden mit äußeren Rändelungen eines Ventils umfasst.

5. Werkzeug nach einem der vorhergehenden Ansprüche, wobei der Griff (3) mit der Schraubantriebsschnittstelle (5) über einen Drehmomentbegrenzer (33, 35, 37) verbunden ist, der ein maximales Drehmoment definiert, das in einer Richtung auf die Schraubantriebsschnittstelle (5) angewendet werden kann.

6. Werkzeug nach Anspruch 5, wobei das maximale Drehmoment durch eine Drehmomenteinstellmutter (31) eingestellt wird, die auf eine Feder (37) wirkt.

7. Werkzeug nach Anspruch 6, wobei der Drehmomentbegrenzer in einem Bereich zwischen 6-50 Ncm einstellbar ist.

8. Werkzeug nach einem der vorhergehenden Ansprüche, wobei der Griff (3) eine Sichtführung (18) aufweist, die in eine Richtung parallel zur Hauptachse (7) zeigt.

9. Kombination aus einem Werkzeug nach einem der vorhergehenden Ansprüche und einem Wärmeregelungsregelventil.

## Revendications

1. Outil de réglage de vanne de commande de régulation de chaleur (1), comprenant une poignée (3) et une interface d'entraînement à vis (5) destinée à coopérer avec une vis de préréglage d'accouplement dans une vanne de commande pour tourner la vis de préréglage en tournant la poignée (3) autour d'un axe principal (7), l'outil (1) comprenant une première bague (9) agencée coaxialement avec l'axe principal (7), pour la rotation avec la poignée (3), dans lequel la première bague (9) est libérable en ce qui concerne la poignée pour la rotation autour de l'axe principal (7) par rapport à la poignée, l'outil (1) étant **caractérisé par** une seconde bague (11) agencée coaxialement avec l'axe principal (7) et de façon rotative par rapport à la première bague (9) autour de l'axe principal, dans lequel la seconde bague comprend une interface de verrouillage de rotation (13) destinée à se relier à une partie de vanne autre que la vis de préréglage, dans lequel une de la première (9) et de la seconde bague (11) comprend une indication de réglage de position angulaire (15), telle qu'une échelle ou analogue, et l'autre comprend un index (17) associé à l'indication de réglage.

2. Outil selon la revendication 1, dans lequel l'interface d'entraînement à vis (5) comprend des cannelures extérieures (19) destinées à se relier à des cannelures intérieures d'une vis de préréglage.

3. Outil selon la revendication 1 ou 2, dans lequel la première bague (9) est agencée sur la poignée (3), la seconde bague (11) est agencée de façon rotative par rapport à la première bague (9), et le couple nécessaire pour tourner la première bague (9) par rapport à la poignée (3) est supérieur au couple nécessaire pour tourner la seconde bague (11) par rapport à la première bague (9).

4. Outil selon la revendication 1 à 3, dans lequel l'interface de verrouillage (13) de la seconde bague (11) comprend des nervures intérieures destinées à se relier à des molettes d'une vanne.

5. Outil selon de quelconques des revendications précédentes, dans lequel la poignée (3) est reliée à l'interface d'entraînement à vis (5) par l'intermédiaire d'un limiteur de couple (33, 35, 37) définissant un couple maximum qui peut être appliqué sur l'interface d'entraînement à vis (5) dans une direction.

6. Outil selon la revendication 5, dans lequel le couple maximum est réglé par un écrou de réglage de couple (31) agissant sur un ressort (37).

7. Outil selon la revendication 6, dans lequel le limiteur de couple est ajustable dans une plage entre 6-50 Ncm.

8. Outil selon de quelconques des revendications précédentes, dans lequel la poignée (3) comprend un guide visuel (18) orienté dans une direction parallèle à l'axe principal (7).

9. Combinaison d'un outil selon de quelconques des revendications précédentes et d'une vanne de commande de régulation de chaleur.
